# EUROPEAN PATENT SPECIFICATION

(11) **EP 4 354 325 B1**
(45) Date of publication and mention of the grant of the patent: **18.06.2025**
(21) Application number: 23197156.5
(22) Date of filing: 13.09.2023
(51) Int. Cl.: G06F 17/40, G06N 3/092, G06N 3/088, G06N 3/0455

(54) **ANOMALY DETECTION USING LOGS**
ANOMALIEDETEKTION UNTER VERWENDUNG VON PROTOKOLLEN
DÉTECTION D'ANOMALIE À L'AIDE DE JOURNAUX

(30) Priority: 07.10.2022 WO PCT/IB2022/059636
(43) Date of publication of application: 17.04.2024
(73) Proprietor: Nokia Solutions and Networks Oy, 02610 Espoo (FI)
(72) Inventor: SZILÁGYI, Péter, 1116 Budapest (HU); HORVATH, Gabor, 1117 Budapest (HU); KADAR, Attila, 1117 Budapest (HU)
(74) Representative: Nokia EPO representatives

(56) References cited:
- EP-A1- 3 979 080
- ZHANG LINMING ET AL: "LogAttn: Unsupervised Log Anomaly Detection with an AutoEncoder Based Attention Mechanism", 7 August 2021, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 222 - 235, XP047604389
- CATILLO MARTA ET AL: "AutoLog: Anomaly detection by deep autoencoding of system logs", EXPERT SYSTEMS WITH APPLICATIONS, ELSEVIER, AMSTERDAM, NL, vol. 191, 10 December 2021 (2021-12-10), XP086924337, ISSN: 0957-4174, [retrieved on 20211210], DOI: 10.1016/J.ESWA.2021.116263

## Description

### Field of the invention

The present disclosure relates to anomaly detection.

### Abbreviations

- 3GPP: 3^{rd} Generation Partnership Project
- 5G/6G/7G: 5^{th}/6^{th}/7^{th} Generation
- AE: Autoencoder
- FM: Fault Management
- HDFS: Hadoop Distributed File System
- ID: Identifier
- ML: Machine Learning
- PM: Performance Management
- RCA: Root Cause Analytics

### Background

Conventionally, performance/failure monitoring and service assurance in telecom networks is based on the collection and analysis of numerical PM/FM counters.

An autoencoder is a type of artificial neural network used to learn efficient codings of unlabeled data (unsupervised learning). The encoding is validated and refined by attempting to regenerate the input from the encoding. The autoencoder learns a representation (encoding) for a set of data, typically for dimensionality reduction, by training the network to ignore insignificant data ("noise").

An autoencoder has two main parts: an encoder that maps the input to a code, and a decoder that reconstructs the input from the code. An optimal autoencoder would perform as close to perfect reconstruction as possible, with "close to perfect" defined by the reconstruction quality function. The simplest way to perform the copying task perfectly would be to duplicate the input. To suppress this behavior, the code space usually has fewer dimensions than the input space.

Document EP3979080 discloses a method and a system for predicting time of occurrence of future server failures using server logs and a stream of numeric time-series data occurred with a particular time window. The method includes accessing plurality of server logs and stream of numeric time-series data, applying density and sequential machine learning model over a plurality of server logs for obtaining first and second outputs, respectively, and applying a stochastic recurrent neural network model over the stream of time-series data to obtain a third output. The method includes aggregating first, second, and third outputs using an ensemble model, predicting likelihood of at least one future server anomaly based on the aggregating step, and determining time of occurrence of the at least one future server anomaly by capturing server behavior characteristics using time-series network model. The server behavior characteristics include time-series patterns of the stream of numeric time-series data.

Document XP086924337, "AutoLog: Anomaly detection by deep autoencoding of system logs", M. Catillo et. all, discloses a method and system for the analysis of logs emitted by computer systems with a focus on anomaly detection. The proposed approach consists in sampling the logs at regular intervals and computing numeric scores. Scores collected under normative operations are used to train a semi-supervised deep autoencoder, which serves as a baseline to classify future scores. The results obtained in detecting anomalies of two industrial systems and the public BG/L and Hadoop datasets widely used as benchmarks, indicate that the recall of AutoLog ranges between 0.96 and 0.99, while the precision is within 0.93 and 0.98. A comparative study with isolation forest, one-class SVM, decision tree, vanilla autoencoder and variational autoencoder demonstrates the validity of the proposal.

Document XP047604389, "LogAttn: Unsupervised log anomaly detection with an autoencoder based attention mechanism", L. Zhang, et. all, discloses an autoencoder model that combines an encoder-decoder structure with an attention mechanism for unsupervised log anomaly detection. The unstructured normal log data is processed by a log parser that uses a semantic analyse and clustering algorithm to parse log data into a sequence of event count vectors and semantic vectors. The encoder combines deep neural networks with an attention mechanism that learns the weights of different features to form a latent feature representation, which is further used by a decoder to reconstruct the log event sequence. If the reconstruction error is above a predefined threshold, it detects an anomaly in the log sequence and reports the result to the administrator.

### Summary

It is an object of the present invention to improve the prior art.

According to a first aspect of the invention, there is provided an apparatus comprising:
one or more processors, and memory storing instructions that, when executed by the one or more processors, cause the apparatus to perform:
converting each log line of a sequence of N log lines among a plurality of log lines into a respective log identifier among K different log identifiers to obtain a sequence of N log identifiers;
for each value of n between 0 and N inclusive:
   for each of the K different log identifiers: counting occurrences of the respective log identifier among the first n log identifiers of the sequence of N log identifiers to obtain a front frequency of the respective log identifier for the respective value of n; and
   for each of the K different log identifiers: counting occurrences of the respective log identifier among the N-n log identifiers of the sequence of N log identifiers following the first n log identifiers of the sequence of N log identifiers to obtain a rear frequency of the respective log identifier for the respective value of n;
   arranging the front frequencies and the rear frequencies of the K different log identifiers in a count vector for the respective value of n according to a predefined order;
   inputting the count vector for the respective value of n into an autoencoder to obtain, from the auto encoder, an output vector for the respective value of n;
   determining a difference between the output vector for the respective value of n and the count vector for the respective value of n; and at least one of the following:
      checking whether the difference between the output vector for the respective value of n and the count vector for the respective value of n is larger than a threshold and marking the sequence of N log lines as anomalous if the difference between the output vector for the respective value of n and the count vector for the respective value of n is larger than the threshold; or
      inputting the difference between the output vector for the respective value of n and the count vector for the respective value of n into the auto encoder as a respective reconstruction error;
wherein each of the K different log identifiers is a respective integer.

The instructions, when executed by the one or more processors, may further cause the apparatus to perform:
marking the sequence of N log lines as not anomalous if, for each of the values of n, the difference between the output vector for the respective value of n and the count vector for the respective value of n is not larger than the threshold.

The instructions, when executed by the one or more processors, may cause the apparatus to perform:
the converting each of the log lines of the sequence of N log lines into the respective log identifier by an integer embedding algorithm.

The instructions, when executed by the one or more processors, may cause the apparatus to perform, for each of the values of n between 0 and N inclusive:
the arranging the front frequencies and the rear frequencies of the K different log identifiers in a count vector for the respective value of n according to the predefined order by arranging the front frequencies in a first portion of the count vector for the respective value of n according to a predefined first order, arranging the rear frequencies in a second portion of the count vector for the respective value of n according to a predefined second order, and combining the first portion of the count vector for the respective value of n and the second portion of the count vector to the count vector for the respective value of n according to a predefined rule.

The instructions, when executed by the one or more processors, may cause the apparatus to perform, for each of the values of n between 0 and N inclusive at least one of the following:
the arranging the front frequencies of the log identifiers in the first portion of the count vector for the respective value of n such that, according to the predefined first order, the log identifiers of the front frequencies increase monotonously from a beginning of the first portion of the counter vector towards an end of the first portion of the counter vector or such that the log identifiers decrease monotonously from the beginning of the first portion of the counter vector towards the end of the first portion of the counter vector; or
the arranging the rear frequencies of the log identifiers in the second portion of the count vector for the respective value of n such that, according to the predefined second order, the log identifiers of the rear frequencies increase monotonously from a beginning of the second portion of the counter vector towards an end of the second portion of the counter vector or such that the log identifiers decrease monotonously from the beginning of the second portion of the counter vector towards the end of the second portion of the counter vector; or the combining the first portion of the count vector for the respective value of n with the second portion of the count vector for the respective value of n by concatenating the first portion of the count vector for the respective value of n and the second portion of the count vector for the respective value of n according to the predefined rule to obtain the count vector for the respective value of n; or
the combining the first portion of the count vector for the respective value of n with the second portion of the count vector for the respective value of n by interleaving the first portion of the count vector for the respective value of n and the second portion of the count vector for the respective value of n according to the predefined rule to obtain the count vector for the respective value of n.

The instructions, when executed by the one or more processors, may further cause the apparatus to perform:
monitoring whether a new log line for a point in time later than the points in time for the log lines in the sequence of N log lines is available;
converting the new log line into a respective log identifier among the K different log identifiers;
removing the log identifier of the log line with an earliest point in time among the sequence of N log lines from the sequence of N log identifiers and adding the log identifier of the new log line to the sequence of N log identifiers to obtain the sequence of N log identifiers.

The instructions, when executed by the one or more processors, may further cause the apparatus to perform:
sorting the log identifiers of the sequence of N log identifiers such that the points in time of the log lines on which the log identifiers are based are subsequent.

The instructions, when executed by the one or more processors, may further cause the apparatus to perform:
determining a number of different types of log lines from the plurality of log lines or from a source code of a system providing the plurality of log lines; setting K equal to or larger than the number of different types of log lines.

The instructions, when executed by the one or more processors, may further cause the apparatus to perform:
identifying, in a system providing the plurality of log lines, a root cause why the sequence of N log lines is marked as anomalous if the sequence of N log lines is marked as anomalous;
mitigating the root cause in the system.

According to a second aspect of the invention, there is provided a method comprising:
converting each log line of a sequence of N log lines among a plurality of log lines into a respective log identifier among K different log identifiers to obtain a sequence of N log identifiers;
for each value of n between 0 and N inclusive:
   for each of the K different log identifiers: counting occurrences of the respective log identifier among the first n log identifiers of the sequence of N log identifiers to obtain a front frequency of the respective log identifier for the respective value of n; and
   for each of the K different log identifiers: counting occurrences of the respective log identifier among the N-n log identifiers of the sequence of N log identifiers following the first n log identifiers of the sequence of N log identifiers to obtain a rear frequency of the respective log identifier for the respective value of n;
   arranging the front frequencies and the rear frequencies of the K different log identifiers in a count vector for the respective value of n according to a predefined order;
   inputting the count vector for the respective value of n into an autoencoder to obtain, from the auto encoder, an output vector for the respective value of n;
   determining a difference between the output vector for the respective value of n and the count vector for the respective value of n; and at least one of the following:
      checking whether the difference between the output vector for the respective value of n and the count vector for the respective value of n is larger than a threshold and marking the sequence of N log lines as anomalous if the difference between the output vector for the respective value of n and the count vector for the respective value of n is larger than the threshold; or
      inputting the difference between the output vector for the respective value of n and the count vector for the respective value of n into the auto encoder as a respective reconstruction error;
wherein each of the K different log identifiers is a respective integer.

The method may further comprise:
marking the sequence of N log lines as not anomalous if, for each of the values of n, the difference between the output vector for the respective value of n and the count vector for the respective value of n is not larger than the threshold.

The converting may be performed by converting each of the log lines of the sequence of N log lines into the respective log identifier by an integer embedding algorithm.

For each of the values of n between 0 and N inclusive:
the arranging may be performed by arranging the front frequencies and the rear frequencies of the K different log identifiers in a count vector for the respective value of n according to the predefined order by arranging the front frequencies in a first portion of the count vector for the respective value of n according to a predefined first order, arranging the rear frequencies in a second portion of the count vector for the respective value of n according to a predefined second order, and combining the first portion of the count vector for the respective value of n and the second portion of the count vector to the count vector for the respective value of n according to a predefined rule.

For each of the values of n between 0 and N inclusive at least one of the following may apply:
the arranging may be performed by arranging the front frequencies of the log identifiers in the first portion of the count vector for the respective value of n such that, according to the predefined first order, the log identifiers of the front frequencies increase monotonously from a beginning of the first portion of the counter vector towards an end of the first portion of the counter vector or such that the log identifiers decrease monotonously from the beginning of the first portion of the counter vector towards the end of the first portion of the counter vector; or
the arranging may be performed by arranging the rear frequencies of the log identifiers in the second portion of the count vector for the respective value of n such that, according to the predefined second order, the log identifiers of the rear frequencies increase monotonously from a beginning of the second portion of the counter vector towards an end of the second portion of the counter vector or such that the log identifiers decrease monotonously from the beginning of the second portion of the counter vector towards the end of the second portion of the counter vector; or the combining the first portion of the count vector for the respective value of n with the second portion of the count vector for the respective value of n by concatenating the first portion of the count vector for the respective value of n and the second portion of the count vector for the respective value of n according to the predefined rule to obtain the count vector for the respective value of n; or
the combining may be performed by combining the first portion of the count vector for the respective value of n with the second portion of the count vector for the respective value of n by interleaving the first portion of the count vector for the respective value of n and the second portion of the count vector for the respective value of n according to the predefined rule to obtain the count vector for the respective value of n.

The method may further comprise:
monitoring whether a new log line for a point in time later than the points in time for the log lines in the sequence of N log lines is available;
converting the new log line into a respective log identifier among the K different log identifiers;
removing the log identifier of the log line with an earliest point in time among the sequence of N log lines from the sequence of N log identifiers and adding the log identifier of the new log line to the sequence of N log identifiers to obtain the sequence of N log identifiers.

The method may further comprise:
sorting the log identifiers of the sequence of N log identifiers such that the points in time of the log lines on which the log identifiers are based are subsequent.

The method may further comprise:
determining a number of different types of log lines from the plurality of log lines or from a source code of a system providing the plurality of log lines; setting K equal to or larger than the number of different types of log lines.

The method may further comprise:
identifying, in a system providing the plurality of log lines, a root cause why the sequence of N log lines is marked as anomalous if the sequence of N log lines is marked as anomalous;
mitigating the root cause in the system.

The method may be a method of anomaly detection.

According to a third aspect of the invention, there is provided a computer program product comprising a set of instructions which, when executed on an apparatus, is configured to cause the apparatus to carry out the method according to the second aspect. The computer program product may be embodied as a computer-readable medium or directly loadable into a computer.

According to some embodiments of the invention, at least one of the following advantages may be achieved:
- unstructured log files (or log lines) may be exploited for anomaly detection and service assurance;
- high precision, recall value, and/or F1 score;
- low processing requirements, in particular because only few model parameters;
- suitable for parallelization;
- suitable for streaming and online service assurance.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 illustrates some processing tasks according to a method according to some example embodiments of the invention (the numerical values of N, K and the log IDs are examples only);
Fig. 2 illustrates an encoder architecture including a comparator according to some example embodiments of the invention;
Fig. 3 illustrates a method according to some example embodiments of the invention;
Fig. 4 shows an apparatus according to an example embodiment of the invention;
Fig. 5 shows a method according to an example embodiment of the invention; and
Fig. 6 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

Latest with 5G, telecom software is increasingly virtualized and deployed on cloud infrastructure, inside virtual machines or cloud native containers. Due to the introduction of IT/cloud technology, new means of software monitoring have become available in the telecom domain, most notably computer logs, which provide an unstructured text stream of information encoding infrastructure metrics, application metrics, performance related information, failures and other events (such as errors, information, debug info).

Some example embodiments of the invention find autonomously anomalies in a stream of computer log lines, without a-priori knowledge on which log lines or which patterns in the log lines are or should be considered anomalous. In order to solve this technical problem, at least one of the following two technical problems has to be solved:
1. No off-the-self supervised deep learning method can be used as those assume labeled training data, wherein each log line is labeled as "anomaly" or "no anomaly". Such labeled data sets do not exist in the 5G/6G telecom domain.
2. Since no labeled training data exists, any available training data may contain a mixture of anomalous and non-anomalous logs. Therefore, off-the-shelf unsupervised training methods depending on the presence of clean (non-anomalous) training data cannot be used.

It is challenging to apply machine learning in order to automatically find patterns in logs without having any a-priori knowledge on the content, semantics or presence of anomalies in the logs. There is no pre-defined format or content for computer logs as they are produced by arbitrary logging statements in the program code of the software modules. Therefore, a log analytics method according to some example embodiments of the invention does not have any dependency of the log structure.

According to some example embodiments of the invention, it is determined and indicated whether or not a sequence of log lines ("input log sequences") is anomalous (i.e., an anomaly, if any, is indicated for the whole input log sequence, not just for a single log line of the input log sequence).

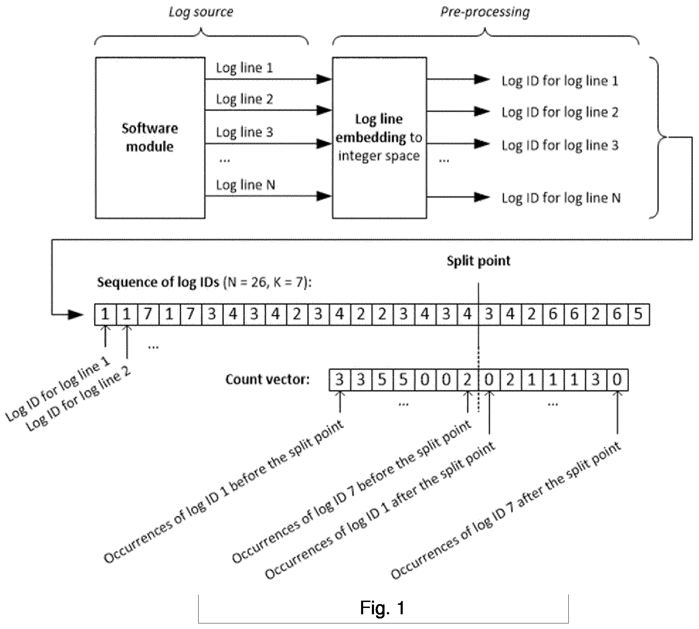

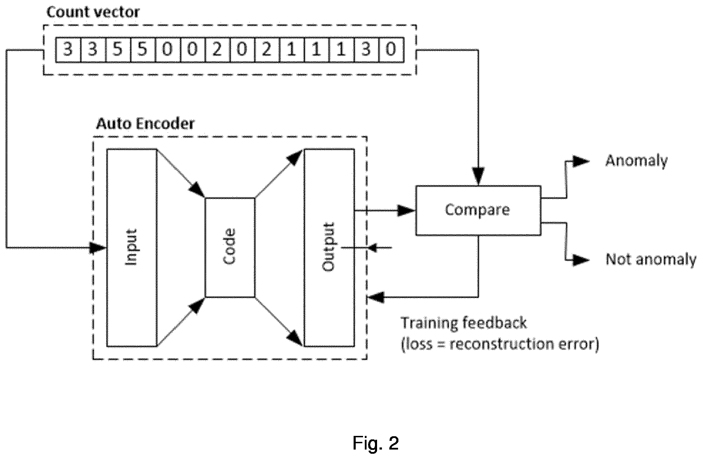

Figs. 1 and 2 illustrate a first phase (pre-processing) and a second phase (autoencoding), respectively, of some example embodiments of the invention.

As shown in Fig. 1, in the pre-processing phase, the textual input log lines are transformed into integers so that similar log lines are denoted by the same integer called log identifier (or log type). This action may be called "log line embedding" and may be performed by any suitable integer embedding algorithm, mapping the logs into integer space. (In general, the mapping may be to any one-dimensional space (e.g. the letters of the alphabet and combinations thereof such as A, B, C, ..., Z, AA, AB, ..., AZ, BA, ...), where the members may be mapped to natural numbers. In the context of the present application such a mapping is considered as an integer embedding algorithm, too).

The number of different log identifiers (integers) that may be output by the log line embedding is limited and denoted by K. K is specific to the system (e.g., SW module) that produces the logs. Any given SW module can only produce a limited number of different types of log lines because the structure of the log lines are pre-determined by the source code of the SW module. Thus, K may be determined if the source code of the SW module is known. Thus, for example, the manufacturer of the system (e.g. SW module) may provide the value of K. Alternatively, or if the source code is not known, K can be obtained by observing a sufficiently large (diverse) amount of logs produced by the system (SW module) and determining the number of different types of log lines. Practically, the determined number of types of log lines may be considered K. In some cases, to be on the safe side, one may choose K slightly larger than the determined number of types of log lines. K may be determined in the pre-processing phase or prior to the preprocessing phase.

After the sequence of log lines is transformed into a sequence of log identifiers, N+1 iterations are performed wherein the sequence of log identifiers is split into respective two parts. I.e., the splitting is performed for all possible combinations. I.e., if the sequence of log identifiers contains N log identifiers, in each iteration the splitting is performed after position n, wherein n has a respective value between 0 and N inclusive. Thus, there are iterations where the two extreme splits (n=0 or n=N) are performed, where one of the two parts is empty and the other contains the entire sequence.

Then, for each split (for each value of n), a respective count vector of length 2K is construed by counting the occurrences of each potential log identifier (out of the K possible log identifiers) in front of the split point and behind the split point. The number of occurrences in front of and behind the split point may be denoted as front frequency and rear frequency, respectively. For each split (each value of n), the front frequencies and the rear frequencies are arranged in the respective count vector according to a predetermined order. I.e., the predetermined order is the same for all values of n between 0 and N inclusive.

An example of such a predetermined order is as follows: For 1 ≤ i ≤ K, the i-th position in the count vector denotes the number of occurrences of log identifier i in front of the split point (the front frequency), whereas for K + 1 ≤ i ≤ 2K the i-th position in the count vector denotes the number of occurrences of log identifier i behind the split point (the rear frequency).

Then, all the count vectors for the different splits (different values of n between 0 and N inclusive) are fed into an Autoencoder (AE), see Fig. 2. In this phase, an AE is trained on the entire set of count vectors created in the previous phase. In each AE training step, the input of the AE is a count vector, and the output of the AE is a reconstruction of the count vector (with some error). The difference between the AE's input and output (i.e., the reconstruction error) is the loss function used, in the training phase, as the training feedback for the AE. In the training phase, the autoencoding is typically (but not necessarily) repeated for a lot of sequences of N log lines generated by the same system (e.g. a software module).

The difference may be calculated, for example, as a square root from the sum of the squares of the differences of each component of the count vector and the output vector.

For inference, the architecture of Fig. 2 may be used, too. For inference, a new log sequence is input into the trained AE in order to detect whether the new log sequence is anomalous or not. That is, the following actions are performed on the new log sequence:
1. Create a count vector for each combination of the possible splits on the log sequence (same as described above).
2. Input each of the count vectors to the AE and compare the AE's output with its input. If the difference between the input and the output is above a pre-defined threshold, the log sequence from which the count vector was created contains an anomaly.

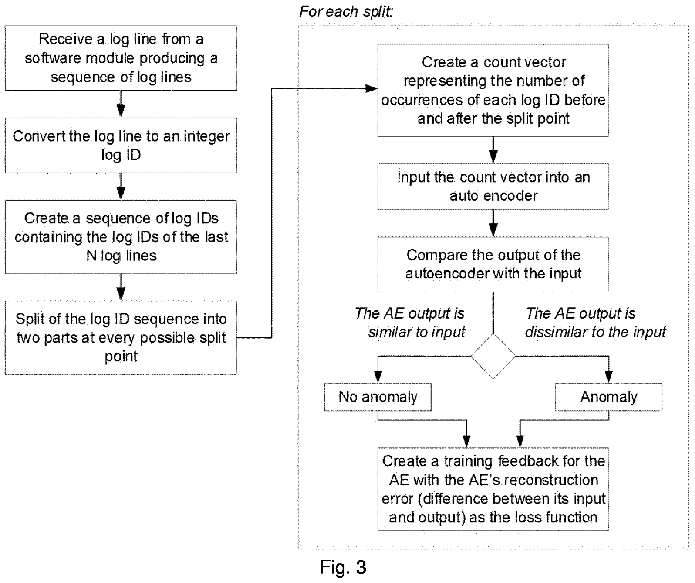

Fig. 3 illustrates a method according to some example embodiments of the invention. In Fig. 3, the sequence of N log lines is created subsequently from the log lines received from the system (e.g. software module). Also, the method of Fig. 3 creates a training feedback for each count vector. If the method is used for inference, in some example embodiments of the invention, such a training feedback need not be created. On the other hand, during the training phase, a decision between "anomaly" and "no anomaly" may be omitted in some example embodiments. In particular, in some example embodiments, the threshold for the difference between input count vector and output vector to decide whether the sequence of logs comprises an anomaly may be defined only after the training was performed.

The count vector based log analytics method according to an example embodiment was implemented and compared to the best state-of-the-art log analytics methods published in the scientific literature. The comparison was based on the publicly known HDFS data set, which is a benchmark for log analytics. Table 1 shows the performance of multiple state-of-the-art models and the count vector based log analytics method according to the example embodiment.

**Table 1: Performance of different log analytics methods**

| Method | Precision | Recall | F1 score | Number of model parameters |
|---|---|---|---|---|
| **Count vector** | **99.6%** | **98.4%** | **99.0%** | **17476** |
| Predict-next | 95.3% | 94.2% | 94.7% | 61714 |
| Bidirectional predict-next | 97.4% | 95.2% | 96.3% | 57393 |
| Sequence autoencoder | 93.6% | 95.5% | 94.6% | 121649 |

Based on the above comparison, some benefits of example embodiments of the invention over state-of-the-art methods are the following:
- Unprecedented high precision and recall values, making the count vector based method the best performing model in terms of classifying the right log lines as anomalies.
- Lightweight operation: the count vector based method does not need computationally expensive recurring deep learning models like predict-next or bidirectional predict-next. This is reflected by the number of model parameters: count vector has significantly less trained model parameters (the parameters of a single AE) compared to any other state-of-the-art model, which translates into less compute cycles during inference and, thus, much higher model throughput (i.e., number of log lines analyzed per second) at a much lower memory footprint. Benefits of lightweight operation include also the potential to be embedded in products or to run on edge clouds.
- Applicable for streaming data by maintaining a memory of the last N log lines and applying the method on the N log lines each time a new log line is received. This gives an immediate anomaly feedback if the latest line of log creates an anomaly within the last N log lines. At the same time it may point to the last log line as being the cause of the anomaly. This gives improved explainability and RCA potential focusing the source of anomaly to an individual line of log.
- Continuous (in-situ or reinforcement) learning: after deploying a trained model for production, every new log line it processes may be used also as a training feedback to continuously train the AE part of the ML architecture. Therefore, the accuracy of the model may stay high even if the production log data starts to deviate from a previously learned distribution.

The count vector method therefore gives a competitive advantage over existing methods, enabling it to be run at the edge, or even on devices, rather than requiring all log data to be streamed to a central computing platform, e.g. in the cloud. This enables to apply the method to sensitive data that must stay at the premise, e.g., for security use cases (applied to user activity log).

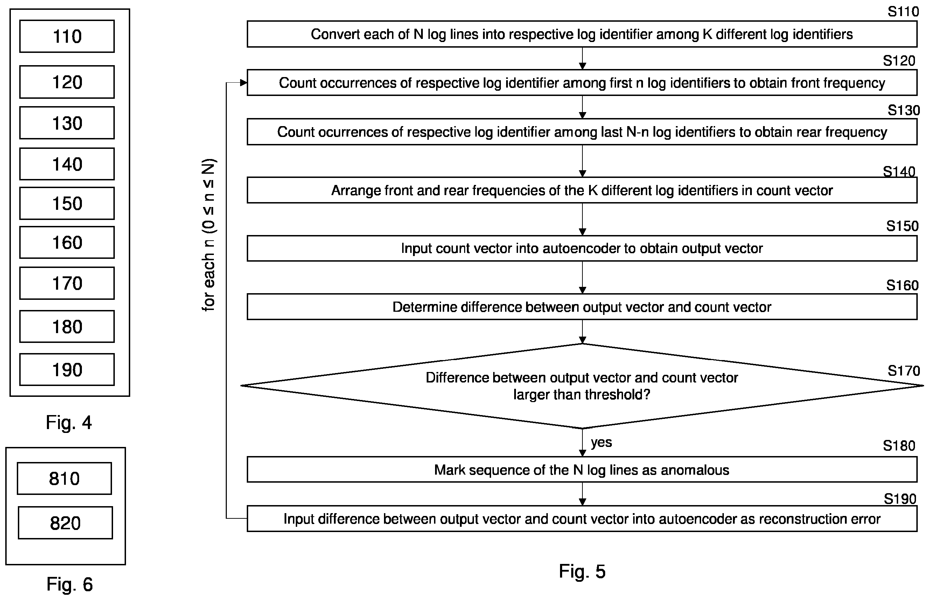

Fig. 4 shows an apparatus according to an example embodiment of the invention. The apparatus may be a log analytics device or an element thereof. Fig. 5 shows a method according to an example embodiment of the invention. The apparatus according to Fig. 6 may perform the method of Fig. 5 but is not limited to this method. The method of Fig. 5 may be performed by the apparatus of Fig. 4 but is not limited to being performed by this apparatus.

The apparatus comprises means for converting 110, first means for counting 120, second means for counting 130, means for arranging 140, first means for inputting 150, means for determining 160, means for checking 170, means for marking 180, and second means for inputting 190. The means for converting 110, first means for counting 120, second means for counting 130, means for arranging 140, first means for inputting 150, means for determining 160, means for checking 170, means for marking 180, and second means for inputting 190 may be a converting means, first counting means, second counting means, arranging means, first inputting means, determining means, checking means, marking means, and second inputting means, respectively. The means for converting 110, first means for counting 120, second means for counting 130, means for arranging 140, first means for inputting 150, means for determining 160, means for checking 170, means for marking 180, and second means for inputting 190 may be a converter, first counter, second counter, arranger, first inputter, determiner, checker, marker, and second inputter, respectively. The means for converting 110, first means for counting 120, second means for counting 130, means for arranging 140, first means for inputting 150, means for determining 160, means for checking 170, means for marking 180, and second means for inputting 190 may be a converting processor, first counting processor, second counting processor, arranging processor, first inputting processor, determining processor, checking processor, marking processor, and second inputting processor, respectively.

Some example embodiments (e.g. used for inference) may comprise the means for checking 170 and the means for marking 180 but may not comprise the means for inputting 190. Some example embodiments (e.g. used for inference) may not comprise the means for checking 170 and the means for marking 180 but may comprise the means for inputting 190. Some example embodiments may comprise the means for checking 170, the means for marking 180, and the means for inputting 190.

The means for converting 110 converts each log line of a sequence of N log lines into a respective log identifier to obtain a sequence of N log identifiers (S110). The log identifiers are selected among K different log identifiers. Each of the K different log identifiers is a respective integer. The sequence of N log lines may be taken from a plurality of log lines. The sequence of N log lines may e sorted, e.g. according to the time of the event reported in the respective log line.

The first means for counting 120, second means for counting 130, means for arranging 140, first means for inputting 150, means for determining 160, means for checking 170 (if any), means for marking 180 (if any), and second means for inputting 190 (if any) perform the following actions for each value of n between 0 and N inclusive. The actions for different values of n may be performed consecutively or fully or partly in parallel.

The first means for counting 120 counts for each of the K different log identifiers occurrences of the respective log identifier among the first n log identifiers of the sequence of N log identifiers (S120). Thus, the first means for counting 120 obtains a front frequency of the respective log identifier for the respective value of n.

The second means for counting 130 counts for each of the K different log identifiers occurrences of the respective log identifier among the N-n log identifiers of the sequence of N log identifiers (S130) following the first n log identifiers of the sequence of N log identifiers, i.e. of the remaining log identifiers after the first means for counting 130 has counted the occurrences. Thus, the second means for counting 130 obtains a rear frequency of the respective log identifier for the respective value of n.

The means for arranging 140 arranges the front frequencies and the rear frequencies of the K different log identifiers in a count vector for the respective value of n according to a predefined order (S140). The first means for inputting 150 inputs the count vector for the respective value of n into an autoencoder (S150). Thus an output vector for the respective value of n is obtained from the autoencoder. The means for determining 160 determines a difference between the output vector for the respective value of n and the count vector for the respective value of n (S160).

If the apparatus comprises the means for checking 170 and the means for marking 180, it may perform the following actions:
The means for checking 170 checks whether the difference between the output vector for the respective value of n and the count vector for the respective value of n is larger than a threshold (S170). If the difference between the output vector for the respective value of n and the count vector for the respective value of n is larger than the threshold (S170 = yes), the means for marking 180 marks the sequence of N log lines as anomalous (S180).

If the apparatus comprises the second means for inputting 190, it may perform the following action:
The second means for inputting 190 inputs the difference between the output vector for the respective value of n and the count vector for the respective value of n into the autoencoder as a respective reconstruction error (S190).

If the apparatus comprises the means for checking 170, the means for marking 180, and the second means for inputting 190, S190 and the pair of S170 and S180 may be performed in an arbitrary sequence. They may be performed fully or partly in parallel.

Fig. 6 shows an apparatus according to an example embodiment of the invention. The apparatus comprises at least one processor 810, at least one memory 820 storing instructions that, when executed by the at least one processor 810, cause the apparatus at least to perform the method according to Fig. 5 and related description.

In some example embodiments, if an anomaly is detected from the log files, a root cause analysis is performed to identify the root cause of the anomaly. If the root cause is identified in the system (e.g. the telco network) providing the logs, the root cause is mitigated to remove the anomaly. In some example embodiments, the root cause of a log anomaly may be identified automatically by correlating the anomalous logs with previous log lines. The correlation may identify that one or more anomalous log lines are usually preceded by some other log lines. The content of the other log lines may be indicative of the root cause of the anomalous log lines (for example, anomalous log lines indicating errors in a network protocol layer may be systematically preceded by log lines that indicate that a certain network interface card had failed - the co-occurrence of the two log lines suggest that the network interface card failure, which is the content of the preceding logs, is the root cause behind the network protocol layer errors). In such a case, in some example embodiments, the system may automatically restart the interface card in order to mitigate the root cause.

For each value of n between 0 and N, the arrangement of the front and rear frequencies in the respective count vector is the same. However, there are various options for such an arrangement. For example, a first portion of the count vector may comprise the frequencies ("front frequency") of occurrences of the log identifiers in the first n log lines, and a second portion of the count vector may comprise the frequencies ("rear frequency") of occurrences of the log identifiers in the remaining log lines. The first and second portions may be combined to the count vector in different ways according to a predefined rule. For example, the first and second portions may be concatenated, wherein either the second portion follows the first portion, or the first portion follows the second portion. The first and second portions may be interleaved. For example, the front frequency and the rear frequency of a certain log identifier may be arranged as neighbors in the count vector. Within the first portion, the front frequencies may be arranged according to some predefined order, e.g. such that the values of the corresponding log identifiers increase (or decrease) monotonously. Within the second portion, the rear frequencies may be arranged according to some predefined order, e.g. such that the values of the corresponding log identifiers increase (or decrease) monotonously. The arrangement of the front frequencies in the first portion and the arrangement of the rear frequencies in the rear portion may be the same or different from each other.

The log lines of a sequence of N log lines are typically sorted in time (the time of the event reported in the log line) when they are received from the system. If it is not known whether or not the sequence of N log lines is sorted in time or if it is known that the N log lines are not sorted in time, in some example embodiments, the log lines are sorted in time before the detection of anomalous behavior is started based on the (sorted) sequence of log lines. However, it is not necessary that the log lines of the sequence of log lines are sorted in time. They may be sorted according to some other criterion, or they may be unsorted.

If there are several input log sequences, they may be processed independently from each other, which enables massive parallelization over multiple log data sources. Some of the input log sequences may comprise one or more of the same log lines, or the input log sequences may not have any log lines in common.

Some example embodiments are explained with respect to a 5G network. However, the invention is not limited to 5G. It may be used in other communication networks, too, e.g. in previous of forthcoming generations of 3GPP networks such as 4G, 6G, or 7G, etc. It may be used in non-3GPP communication networks, too, such as in wired communication networks. It may be used in any system which produces a number of log lines.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a means for service assurance or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments of the present invention. However, it should be noted that the description of the preferred example embodiments is given by way of example only and that various modifications may be made without departing from the scope of the invention as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. Apparatus comprising:
one or more processors, and memory storing instructions that, when executed by the one or more processors, cause the apparatus to perform:
converting each log line of a sequence of N log lines among a plurality of log lines into a respective log identifier among K different log identifiers to obtain a sequence of N log identifiers;
for each value of n between 0 and N inclusive:
for each of the K different log identifiers: counting occurrences of the respective log identifier among the first n log identifiers of the sequence of N log identifiers to obtain a front frequency of the respective log identifier for the respective value of n; and
for each of the K different log identifiers: counting occurrences of the respective log identifier among the N-n log identifiers of the sequence of N log identifiers following the first n log identifiers of the sequence of N log identifiers to obtain a rear frequency of the respective log identifier for the respective value of n;
arranging the front frequencies and the rear frequencies of the K different log identifiers in a count vector for the respective value of n according to a predefined order;
inputting the count vector for the respective value of n into an autoencoder to obtain, from the auto encoder, an output vector for the respective value of n;
determining a difference between the output vector for the respective value of n and the count vector for the respective value of n; and at least one of the following:
checking whether the difference between the output vector for the respective value of n and the count vector for the respective value of n is larger than a threshold and marking the sequence of N log lines as anomalous if the difference between the output vector for the respective value of n and the count vector for the respective value of n is larger than the threshold; or
inputting the difference between the output vector for the respective value of n and the count vector for the respective value of n into the auto encoder as a respective reconstruction error;
wherein each of the K different log identifiers is a respective integer.

2. The apparatus according to claim 1, wherein the instructions, when executed by the one or more processors, further cause the apparatus to perform:
marking the sequence of N log lines as not anomalous if, for each of the values of n, the difference between the output vector for the respective value of n and the count vector for the respective value of n is not larger than the threshold.

3. The apparatus according to any of claims 1 and 2, wherein the instructions, when executed by the one or more processors, cause the apparatus to perform:
the converting each of the log lines of the sequence of N log lines into the respective log identifier by an integer embedding algorithm.

4. The apparatus according to any of claims 1 to 3, wherein the instructions, when executed by the one or more processors, further cause the apparatus to perform:
identifying, in a system providing the plurality of log lines, a root cause why the sequence of N log lines is marked as anomalous if the sequence of N log lines is marked as anomalous;
mitigating the root cause in the system.

5. Method comprising:
converting each log line of a sequence of N log lines among a plurality of log lines into a respective log identifier among K different log identifiers to obtain a sequence of N log identifiers;
for each value of n between 0 and N inclusive:
for each of the K different log identifiers: counting occurrences of the respective log identifier among the first n log identifiers of the sequence of N log identifiers to obtain a front frequency of the respective log identifier for the respective value of n; and
for each of the K different log identifiers: counting occurrences of the respective log identifier among the N-n log identifiers of the sequence of N log identifiers following the first n log identifiers of the sequence of N log identifiers to obtain a rear frequency of the respective log identifier for the respective value of n;
arranging the front frequencies and the rear frequencies of the K different log identifiers in a count vector for the respective value of n according to a predefined order;
inputting the count vector for the respective value of n into an autoencoder to obtain, from the auto encoder, an output vector for the respective value of n;
determining a difference between the output vector for the respective value of n and the count vector for the respective value of n; and at least one of the following:
checking whether the difference between the output vector for the respective value of n and the count vector for the respective value of n is larger than a threshold and marking the sequence of N log lines as anomalous if the difference between the output vector for the respective value of n and the count vector for the respective value of n is larger than the threshold; or
inputting the difference between the output vector for the respective value of n and the count vector for the respective value of n into the auto encoder as a respective reconstruction error;
wherein each of the K different log identifiers is a respective integer.

6. The method according to claim 5, further comprising:
marking the sequence of N log lines as not anomalous if, for each of the values of n, the difference between the output vector for the respective value of n and the count vector for the respective value of n is not larger than the threshold.

7. The method according to any of claims 5 and 6, wherein:
the converting is performed by converting each of the log lines of the sequence of N log lines into the respective log identifier by an integer embedding algorithm.

8. The method according to any of claims 5 to 7, wherein, for each of the values of n between 0 and N inclusive:
the arranging is performed by arranging the front frequencies and the rear frequencies of the K different log identifiers in a count vector for the respective value of n according to the predefined order by arranging the front frequencies in a first portion of the count vector for the respective value of n according to a predefined first order, arranging the rear frequencies in a second portion of the count vector for the respective value of n according to a predefined second order, and combining the first portion of the count vector for the respective value of n and the second portion of the count vector to the count vector for the respective value of n according to a predefined rule.

9. The method according to claim 8, wherein, for each of the values of n between 0 and N inclusive at least one of the following:
the arranging is performed by arranging the front frequencies of the log identifiers in the first portion of the count vector for the respective value of n such that, according to the predefined first order, the log identifiers of the front frequencies increase monotonously from a beginning of the first portion of the counter vector towards an end of the first portion of the counter vector or such that the log identifiers decrease monotonously from the beginning of the first portion of the counter vector towards the end of the first portion of the counter vector; or
the arranging is performed by arranging the rear frequencies of the log identifiers in the second portion of the count vector for the respective value of n such that, according to the predefined second order, the log identifiers of the rear frequencies increase monotonously from a beginning of the second portion of the counter vector towards an end of the second portion of the counter vector or such that the log identifiers decrease monotonously from the beginning of the second portion of the counter vector towards the end of the second portion of the counter vector; or the combining the first portion of the count vector for the respective value of n with the second portion of the count vector for the respective value of n by concatenating the first portion of the count vector for the respective value of n and the second portion of the count vector for the respective value of n according to the predefined rule to obtain the count vector for the respective value of n; or
the combining is performed by combining the first portion of the count vector for the respective value of n with the second portion of the count vector for the respective value of n by interleaving the first portion of the count vector for the respective value of n and the second portion of the count vector for the respective value of n according to the predefined rule to obtain the count vector for the respective value of n.

10. The method according to any of claims 5 to 9, further comprising:
monitoring whether a new log line for a point in time later than the points in time for the log lines in the sequence of N log lines is available;
converting the new log line into a respective log identifier among the K different log identifiers;
removing the log identifier of the log line with an earliest point in time among the sequence of N log lines from the sequence of N log identifiers and adding the log identifier of the new log line to the sequence of N log identifiers to obtain the sequence of N log identifiers.

11. The method according to any of claims 5 to 10, further comprising:
sorting the log identifiers of the sequence of N log identifiers such that the points in time of the log lines on which the log identifiers are based are subsequent.

12. The method according to any of claims 5 to 11, further comprising:
determining a number of different types of log lines from the plurality of log lines or from a source code of a system providing the plurality of log lines; setting K equal to or larger than the number of different types of log lines.

13. The method according to any of claims 5 to 12, further comprising:
identifying, in a system providing the plurality of log lines, a root cause why the sequence of N log lines is marked as anomalous if the sequence of N log lines is marked as anomalous;
mitigating the root cause in the system.

14. A computer program product comprising a set of instructions which, when executed on an apparatus, is configured to cause the apparatus to carry out the method according to any of claims 5 to 13.

15. The computer program product according to claim 14, embodied as a computer-readable medium or directly loadable into a computer.

## Patentansprüche

1. Vorrichtung, die Folgendes umfasst:
einen oder mehrere Prozessoren und einen Speicher zum Speichern von Anweisungen, die, wenn sie von dem einen oder den mehreren Prozessoren ausgeführt werden, die Vorrichtung veranlassen, Folgendes durchzuführen:
Umwandeln von jeder Protokollzeile einer Folge von N Protokollzeilen unter einer Vielzahl von Protokollzeilen in eine jeweilige Protokollkennung unter K verschiedenen Protokollkennungen, um eine Folge von N Protokollkennungen zu erhalten;
für jeden Wert von n zwischen 0 und einschließlich N:
für jede der K verschiedenen Protokollkennungen: Zählen des Auftretens der jeweiligen Protokollkennung unter den ersten n Protokollkennungen der Folge von N Protokollkennungen, um eine vordere Häufigkeit der jeweiligen Protokollkennung für den jeweiligen Wert von n zu erhalten; und
für jede der K verschiedenen Protokollkennungen: Zählen des Auftretens der jeweiligen Protokollkennung unter den N-n Protokollkennungen der Folge von N Protokollkennungen, die den ersten n Protokollkennungen der Folge von N Protokollkennungen folgen, um eine hintere Häufigkeit der jeweiligen Protokollkennung für den jeweiligen Wert von n zu erhalten;
Anordnen der vorderen Häufigkeiten und der hinteren Häufigkeiten der K verschiedenen Protokollkennungen in einem Zählvektor für den jeweiligen Wert von n gemäß einer vordefinierten Reihenfolge;
Eingeben des Zählvektors für den jeweiligen Wert von n in einen Autocodierer, um vom Autocodierer einen Ausgabevektor für den jeweiligen Wert von n zu erhalten;
Bestimmen einer Differenz zwischen dem Ausgabevektor für den jeweiligen Wert von n und dem Zählvektor für den jeweiligen Wert von n; und mindestens eines von Folgendem:
Prüfen, ob die Differenz zwischen dem Ausgabevektor für den jeweiligen Wert von n und dem Zählvektor für den jeweiligen Wert von n größer ist als ein Schwellwert, und Markieren der Folge von N Protokollzeilen als unnormal, wenn die Differenz zwischen dem Ausgabevektor für den jeweiligen Wert von n und dem Zählvektor für den jeweiligen Wert von n größer ist als der Schwellwert; oder
Eingeben der Differenz zwischen dem Ausgabevektor für den jeweiligen Wert von n und dem Zählvektor für den jeweiligen Wert von n in den Autocodierer als einen jeweiligen Rekonstruktionsfehler;
wobei jede der K verschiedenen Protokollkennungen eine jeweilige Ganzzahl ist.

2. Vorrichtung nach Anspruch 1, wobei die Anweisungen, wenn sie von dem einen oder den mehreren Prozessoren ausgeführt werden, die Vorrichtung ferner veranlassen, Folgendes durchzuführen:
Markieren der Folge von N Protokollzeilen als nicht unnormal, wenn für jeden der Werte von n die Differenz zwischen dem Ausgabevektor für den jeweiligen Wert von n und dem Zählvektor für den jeweiligen Wert von n nicht größer ist als der Schwellwert.

3. Vorrichtung nach einem der Ansprüche 1 und 2, wobei die Anweisungen, wenn sie von dem einen oder den mehreren Prozessoren ausgeführt werden, die Vorrichtung ferner veranlassen, Folgendes durchzuführen:
das Umwandeln von jeder der Protokollzeilen der Folge von N Protokollzeilen in die jeweilige Protokollkennung durch einen eine Ganzzahl einbettenden Algorithmus.

4. Vorrichtung nach einem der Ansprüche 1 bis 3, wobei die Anweisungen, wenn sie von dem einen oder den mehreren Prozessoren ausgeführt werden, die Vorrichtung ferner veranlassen, Folgendes durchzuführen:
Identifizieren einer Grundursache, weshalb die Folge von N Protokollzeilen als unnormal markiert ist, wenn die Folge von N Protokollzeilen als unnormal markiert ist, in einem System, das die Vielzahl von Protokollzeilen bereitstellt;
Abschwächen der Grundursache im System.

5. Verfahren, das Folgendes umfasst:
Umwandeln von jeder Protokollzeile einer Folge von N Protokollzeilen unter einer Vielzahl von Protokollzeilen in eine jeweilige Protokollkennung unter K verschiedenen Protokollkennungen, um eine Folge von N Protokollkennungen zu erhalten;
für jeden Wert von n zwischen 0 und einschließlich N:
für jede der K verschiedenen Protokollkennungen: Zählen des Auftretens der jeweiligen Protokollkennung unter den ersten n Protokollkennungen der Folge von N Protokollkennungen, um eine vordere Häufigkeit der jeweiligen Protokollkennung für den jeweiligen Wert von n zu erhalten; und
für jede der K verschiedenen Protokollkennungen: Zählen des Auftretens der jeweiligen Protokollkennung unter den N-n Protokollkennungen der Folge von N Protokollkennungen, die den ersten n Protokollkennungen der Folge von N Protokollkennungen folgen, um eine hintere Häufigkeit der jeweiligen Protokollkennung für den jeweiligen Wert von n zu erhalten;
Anordnen der vorderen Häufigkeiten und der hinteren Häufigkeiten der K verschiedenen Protokollkennungen in einem Zählvektor für den jeweiligen Wert von n gemäß einer vordefinierten Reihenfolge;
Eingeben des Zählvektors für den jeweiligen Wert von n in einen Autocodierer, um vom Autocodierer einen Ausgabevektor für den jeweiligen Wert von n zu erhalten;
Bestimmen einer Differenz zwischen dem Ausgabevektor für den jeweiligen Wert von n und dem Zählvektor für den jeweiligen Wert von n; und mindestens eines von Folgendem:
Prüfen, ob die Differenz zwischen dem Ausgabevektor für den jeweiligen Wert von n und dem Zählvektor für den jeweiligen Wert von n größer ist als ein Schwellwert, und Markieren der Folge von N Protokollzeilen als unnormal, wenn die Differenz zwischen dem Ausgabevektor für den jeweiligen Wert von n und dem Zählvektor für den jeweiligen Wert von n größer ist als der Schwellwert; oder
Eingeben der Differenz zwischen dem Ausgabevektor für den jeweiligen Wert von n und dem Zählvektor für den jeweiligen Wert von n in den Autocodierer als einen jeweiligen Rekonstruktionsfehler;
wobei jede der K verschiedenen Protokollkennungen eine jeweilige Ganzzahl ist.

6. Verfahren nach Anspruch 5, das ferner Folgendes umfasst:
Markieren der Folge von N Protokollzeilen als nicht unnormal, wenn für jeden der Werte von n die Differenz zwischen dem Ausgabevektor für den jeweiligen Wert von n und dem Zählvektor für den jeweiligen Wert von n nicht größer ist als der Schwellwert.

7. Verfahren nach einem der Ansprüche 5 und 6, wobei:
das Umwandeln durch Umwandeln von jeder der Protokollzeilen der Folge von N Protokollzeilen in die jeweilige Protokollkennung durch einen eine Ganzzahl einbettenden Algorithmus durchgeführt wird.

8. Verfahren nach einem der Ansprüche 5 bis 7, wobei für jeden der Werte von n zwischen 0 und einschließlich N Folgendes gilt:
das Anordnen wird durch Anordnen der vorderen Häufigkeiten und der hinteren Häufigkeiten der K verschiedenen Protokollkennungen in einem Zählvektor für den jeweiligen Wert von n gemäß der vordefinierten Reihenfolge durch Anordnen der vorderen Häufigkeiten in einem ersten Abschnitt des Zählvektors für den jeweiligen Wert von n gemäß einer vordefinierten ersten Reihenfolge, Anordnen der hinteren Häufigkeiten in einem zweiten Abschnitt des Zählvektors für den jeweiligen Wert von n gemäß einer vordefinierten zweiten Reihenfolge und Kombinieren des ersten Abschnitts des Zählvektors für den jeweiligen Wert von n und des zweiten Abschnitts des Zählvektors zum Zählvektor für den jeweiligen Wert von n gemäß einer vordefinierten Regel durchgeführt.

9. Verfahren nach Anspruch 8, wobei für jeden der Werte von n zwischen 0 und einschließlich N mindestens eines von Folgendem gilt:
das Anordnen wird durch Anordnen der vorderen Häufigkeiten der Protokollkennungen im ersten Abschnitt des Zählvektors für den jeweiligen Wert von n durchgeführt, derart, dass gemäß der vordefinierten ersten Reihenfolge die Protokollkennungen der vorderen Häufigkeiten von einem Anfang des ersten Abschnitts des Zählervektors zu einem Ende des ersten Abschnitts des Zählervektors monoton erhöht werden, oder derart, dass die Protokollkennungen vom Anfang des ersten Abschnitts des Zählervektors zum Ende des ersten Abschnitts des Zählervektors monoton verringert werden; oder
das Anordnen wird durch Anordnen der hinteren Häufigkeiten der Protokollkennungen im zweiten Abschnitt des Zählvektors für den jeweiligen Wert von n durchgeführt, derart, dass gemäß der vordefinierten zweiten Reihenfolge die Protokollkennungen der hinteren Häufigkeiten vom Anfang des zweiten Abschnitts des Zählervektors zu einem Ende des zweiten Abschnitts des Zählervektors monoton erhöht werden, oder derart, dass die Protokollkennungen vom Anfang des zweiten Abschnitts des Zählervektors zum Ende des zweiten Abschnitts des Zählervektors monoton verringert werden; oder das Kombinieren des ersten Abschnitts des Zählvektors für den jeweiligen Wert von n mit dem zweiten Abschnitt des Zählvektors für den jeweiligen Wert von n durch Verketten des ersten Abschnitts des Zählvektors für den jeweiligen Wert von n und des zweiten Abschnitts des Zählvektors für den jeweiligen Wert von n gemäß der vordefinierten Regel, um den Zählvektor für den jeweiligen Wert von n zu erhalten; oder
das Kombinieren wird durch Kombinieren des ersten Abschnitts des Zählvektors für den jeweiligen Wert von n mit dem zweiten Abschnitt des Zählvektors für den jeweiligen Wert von n durch Verschachteln des ersten Abschnitts des Zählvektors für den jeweiligen Wert von n und des zweiten Abschnitts des Zählvektors für den jeweiligen Wert von n gemäß der vordefinierten Regel durchgeführt, um den Zählvektor für den jeweiligen Wert von n zu erhalten.

10. Verfahren nach einem der Ansprüche 5 bis 9, das ferner Folgendes umfasst:
Überwachen, ob eine neue Protokollzeile für einen Zeitpunkt verfügbar ist, der hinter den Zeitpunkten für die Protokollzeilen in der Folge von N Protokollzeilen liegt;
Umwandeln der neuen Protokollzeile in eine jeweilige Protokollkennung unter den K verschiedenen Protokollkennungen;
Entfernen der Protokollkennung der Protokollzeile mit einem frühesten Zeitpunkt unter der Folge von N Protokollzeilen aus der Folge von N Protokollkennungen und Hinzufügen der Protokollkennung der neuen Protokollzeile zur Folge von N Protokollkennungen, um die Folge von N Protokollkennungen zu erhalten.

11. Verfahren nach einem der Ansprüche 5 bis 10, das ferner Folgendes umfasst:
Sortieren der Protokollkennungen der Folge von N Protokollkennungen, derart, dass die Zeitpunkte der Protokollzeilen, auf denen die Protokollkennungen basieren, nachfolgend sind.

12. Verfahren nach einem der Ansprüche 5 bis 11, das ferner Folgendes umfasst:
Bestimmen einer Anzahl von verschiedenen Arten von Protokollzeilen aus der Vielzahl von Protokollzeilen oder aus einem Quellcode eines Systems, das die Vielzahl von Protokollzeilen bereitstellt; Einstellen von K auf größer als oder gleich der Anzahl von verschiedenen Arten von Protokollzeilen.

13. Verfahren nach einem der Ansprüche 5 bis 12, das ferner Folgendes umfasst:
Identifizieren einer Grundursache, weshalb die Folge von N Protokollzeilen als unnormal markiert ist, wenn die Folge von N Protokollzeilen als unnormal markiert ist, in einem System, das die Vielzahl von Protokollzeilen bereitstellt;
Abschwächen der Grundursache im System.

14. Computerprogrammprodukt, das einen Satz von Anweisungen umfasst, der, wenn er in einer Vorrichtung ausgeführt wird, dazu ausgelegt ist, die Vorrichtung zu veranlassen, das Verfahren nach einem der Ansprüche 5 bis 13 umzusetzen.

15. Computerprogrammprodukt nach Anspruch 14, das als ein computerlesbares Medium realisiert oder direkt in einen Computer ladbar ist.

## Revendications

1. Appareil comprenant :
un ou plusieurs processeurs, et une mémoire stockant des instructions qui, lorsqu'elles sont exécutées par les un ou plusieurs processeurs, amènent l'appareil à effectuer ce qui suit :
convertir chaque ligne de journal d'une séquence de N lignes de journal parmi une pluralité de lignes de journal en un identifiant de journal respectif parmi K identifiants de journal différents pour obtenir une séquence de N identifiants de journal ;
pour chaque valeur n entre 0 et N inclus :
pour chacun des K identifiants de journal différents : compter les occurrences de l'identifiant de journal respectif parmi les n premiers identifiants de journal de la séquence de N identifiants de journal pour obtenir une fréquence avant de l'identifiant de journal respectif pour la valeur n respective ; et
pour chacun des K identifiants de journal différents : compter les occurrences de l'identifiant de journal respectif parmi les N-n identifiants de journal de la séquence de N identifiants de journal suivant les n premiers identifiants de journal de la séquence de N identifiants de journal pour obtenir une fréquence arrière de l'identifiant de journal respectif pour la valeur n respective ;
agencer les fréquences avant et les fréquences arrière des K identifiants de journal différents dans un vecteur de comptage pour la valeur n respective selon un ordre prédéfini ;
entrer le vecteur de comptage pour la valeur n respective dans un auto-codeur pour obtenir, à partir de l'auto-codeur, un vecteur de sortie pour la valeur n respective ;
déterminer une différence entre le vecteur de sortie pour la valeur n respective et le vecteur de comptage pour la valeur n respective ; et au moins l'une des opérations suivantes :
vérifier si la différence entre le vecteur de sortie pour la valeur n respective et le vecteur de comptage pour la valeur n respective est supérieure à un seuil, et marquer la séquence de N lignes de journal comme anormale si la différence entre le vecteur de sortie pour la valeur n respective et le vecteur de comptage pour la valeur n respective est supérieure au seuil ; ou
entrer la différence entre le vecteur de sortie pour la valeur n respective et le vecteur de comptage pour la valeur n respective dans l'auto-codeur comme erreur de reconstruction respective ;
dans lequel chacun des K identifiants de journal différents est un nombre entier respectif.

2. Appareil selon la revendication 1, dans lequel les instructions, lorsqu'elles sont exécutées par les un ou plusieurs processeurs, amènent en outre l'appareil à effectuer ce qui suit :
marquer la séquence de N lignes de journal comme n'étant pas anormale si, pour chacune des valeurs n, la différence entre le vecteur de sortie pour la valeur n respective et le vecteur de comptage pour la valeur n respective n'est pas supérieure au seuil.

3. Appareil selon l'une des revendications 1 et 2, dans lequel les instructions, lorsqu'elles sont exécutées par les un ou plusieurs processeurs, amènent l'appareil à effectuer ce qui suit :
convertir chacune des lignes de journal de la séquence de N lignes de journal en l'identifiant de journal respectif par un algorithme d'intégration de nombre entier.

4. Appareil selon l'une des revendications 1 à 3, dans lequel les instructions, lorsqu'elles sont exécutées par les un ou plusieurs processeurs, amènent en outre l'appareil à effectuer ce qui suit :
identifier, dans un système fournissant la pluralité de lignes de journal, une cause profonde pour laquelle la séquence de N lignes de journal est marquée comme anormale si la séquence de N lignes de journal est marquée comme anormale ;
atténuer la cause profonde dans le système.

5. Procédé comprenant les étapes suivantes :
convertir chaque ligne de journal d'une séquence de N lignes de journal parmi une pluralité de lignes de journal en un identifiant de journal respectif parmi K identifiants de journal différents pour obtenir une séquence de N identifiants de journal ;
pour chaque valeur n entre 0 et N inclus :
pour chacun des K identifiants de journal différents : compter les occurrences de l'identifiant de journal respectif parmi les n premiers identifiants de journal de la séquence de N identifiants de journal pour obtenir une fréquence avant de l'identifiant de journal respectif pour la valeur n respective ; et
pour chacun des K identifiants de journal différents : compter les occurrences de l'identifiant de journal respectif parmi les N-n identifiants de journal de la séquence de N identifiants de journal suivant les n premiers identifiants de journal de la séquence de N identifiants de journal pour obtenir une fréquence arrière de l'identifiant de journal respectif pour la valeur n respective ;
agencer les fréquences avant et les fréquences arrière des K identifiants de journal différents dans un vecteur de comptage pour la valeur n respective selon un ordre prédéfini ;
entrer le vecteur de comptage pour la valeur n respective dans un auto-codeur pour obtenir, à partir de l'auto-codeur, un vecteur de sortie pour la valeur n respective ;
déterminer une différence entre le vecteur de sortie pour la valeur n respective et le vecteur de comptage pour la valeur n respective ; et au moins l'une des opérations suivantes :
vérifier si la différence entre le vecteur de sortie pour la valeur n respective et le vecteur de comptage pour la valeur n respective est supérieure à un seuil, et marquer la séquence de N lignes de journal comme anormale si la différence entre le vecteur de sortie pour la valeur n respective et le vecteur de comptage pour la valeur n respective est supérieure au seuil ; ou
entrer la différence entre le vecteur de sortie pour la valeur n respective et le vecteur de comptage pour la valeur n respective dans l'auto-codeur comme erreur de reconstruction respective ;
dans lequel chacun des K identifiants de journal différents est un nombre entier respectif.

6. Procédé selon la revendication 5, comprenant en outre l'étape suivante :
marquer la séquence de N lignes de journal comme n'étant pas anormale si, pour chacune des valeurs n, la différence entre le vecteur de sortie pour la valeur n respective et le vecteur de comptage pour la valeur n respective n'est pas supérieure au seuil.

7. Procédé selon l'une des revendications 5 et 6, dans lequel :
la conversion est effectuée en convertissant chacune des lignes de journal de la séquence de N lignes de journal en l'identifiant de journal respectif par un algorithme d'intégration de nombre entier.

8. Procédé selon l'une des revendications 5 à 7, dans lequel, pour chacune des valeurs n entre 0 et N inclus :
l'agencement est effectué en agençant les fréquences avant et les fréquences arrière des K identifiants de journal différents dans un vecteur de comptage pour la valeur n respective selon l'ordre prédéfini, en agençant les fréquences avant dans une première partie du vecteur de comptage pour la valeur n respective selon un premier ordre prédéfini, en agençant les fréquences arrière dans une deuxième partie du vecteur de comptage pour la valeur n respective selon un deuxième ordre prédéfini, et en combinant la première partie du vecteur de comptage pour la valeur n respective et la deuxième partie du vecteur de comptage au vecteur de comptage pour la valeur n respective selon une règle prédéfinie.

9. Procédé selon la revendication 8, dans lequel, pour chacune des valeurs n entre 0 et N inclus, au moins l'un des éléments suivants :
l'agencement est effectué en agençant les fréquences avant de l'identifiants de journal dans la première partie du vecteur de comptage pour la valeur n respective de sorte que, selon le premier ordre prédéfini, les identifiants de journal des fréquences avant augmentent de manière monotone d'un début de la première partie du vecteur de comptage à une extrémité de la première partie du vecteur de comptage, ou de sorte que les identifiants de journal diminuent de manière monotone du début de la première partie du vecteur de comptage à la fin de la première partie du vecteur de comptage ; ou
l'agencement est effectué en agençant les fréquences arrière de l'identifiants de journal dans la deuxième partie du vecteur de comptage pour la valeur n respective de sorte que, selon le deuxième ordre prédéfini, les identifiants de journal des fréquences arrière augmentent de manière monotone du début de la deuxième partie du vecteur de comptage à une extrémité de la deuxième partie du vecteur de comptage, ou de sorte que les identifiants de journal diminuent de manière monotone du début de la deuxième partie du vecteur de comptage à la fin de la deuxième partie du vecteur de comptage ; ou en combinant la première partie du vecteur de comptage pour la valeur n respective avec la deuxième partie du vecteur de comptage pour la valeur n respective en concaténant la première partie du vecteur de comptage pour la valeur n respective et la deuxième partie du vecteur de comptage pour la valeur n respective selon la règle prédéfinie pour obtenir le vecteur de comptage pour la valeur n respective ; ou
la combinaison de est effectuée en combinant la première partie du vecteur de comptage pour la valeur n respective avec la deuxième partie du vecteur de comptage pour la valeur n respective en entrelaçant la première partie du vecteur de comptage pour la valeur n respective et la deuxième partie du vecteur de comptage pour la valeur n respective selon la règle prédéfinie pour obtenir le vecteur de comptage pour la valeur n respective.

10. Procédé selon l'une des revendications 5 à 9, comprenant en outre les étapes suivantes :
vérifier si une nouvelle ligne de journal pour un moment postérieur aux moments pour les lignes de journal dans la séquence de N lignes de journal est disponible ;
convertir la nouvelle ligne de journal en un identifiant de journal respectif parmi les K identifiants de journal différents ;
supprimer de la séquence de N identifiants de journal l'identifiant de journal de la ligne de journal dont le moment est le plus précoce parmi la séquence de N lignes de journal, et ajouter à la séquence de N identifiants de journal l'identifiant de journal de la nouvelle ligne de journal pour obtenir la séquence de N identifiants de journal.

11. Procédé selon l'une des revendications 5 à 10, comprenant en outre l'étape suivante :
trier les identifiants de journal de la séquence de N identifiants de journal de sorte que les moments des lignes de journal sur lesquelles sont basés les identifiants de journal soient postérieurs.

12. Procédé selon l'une des revendications 5 à 11, comprenant en outre les étapes suivantes :
déterminer un nombre de types différents de lignes de journal à partir de la pluralité de lignes de journal ou à partir d'un code source d'un système fournissant la pluralité de lignes de journal ;
définir K pour qu'il soit égal ou supérieur au nombre de types différents de lignes de journal.

13. Procédé selon l'une des revendications 5 à 12, comprenant en outre les étapes suivantes :
identifier, dans un système fournissant la pluralité de lignes de journal, une cause profonde pour laquelle la séquence de N lignes de journal est marquée comme anormale si la séquence de N lignes de journal est marquée comme anormale ;
atténuer la cause profonde dans le système.

14. Produit de programme informatique comprenant un ensemble d'instructions qui, lorsqu'elles sont exécutées sur un appareil, sont configurées pour amener l'appareil à mettre en œuvre le procédé selon l'une des revendications 5 à 13.

15. Produit de programme informatique selon la revendication 14, sous la forme d'un support lisible par ordinateur ou directement chargeable dans un ordinateur.
